# EUROPÄISCHE PATENTSCHRIFT

(11) **EP 3 121 523 B1**
(45) Veröffentlichungstag und Bekanntmachung des Hinweises auf die Patenterteilung: **10.07.2019**
(21) Anmeldenummer: 16168728.0
(22) Anmeldetag: 09.05.2016
(51) Int. Cl.: F24D 19/10

(54) **HEIZUNGSSYSTEM UND VERFAHREN ZUM BETRIEB EINES HEIZUNGSSYSTEMS**
HEATING SYSTEM AND METHOD FOR OPERATING A HEATING SYSTEM
SYSTEME DE CHAUFFAGE ET PROCEDE DE FONCTIONNEMENT D'UN SYSTEME DE CHAUFFAGE

(30) Priorität: 20.07.2015 DE 102015213564
(43) Veröffentlichungstag der Anmeldung: 25.01.2017
(73) Patentinhaber: ROBERT BOSCH GMBH, 70442 Stuttgart (DE)
(72) Erfinder: Schueler, Ralf, 97816 Lohr (DE); Wuest, Harald, 35469 Allendorf (DE)

(56) Entgegenhaltungen:
- EP-A1- 2 442 052
- DE-U1-202013 004 507
- US-A1- 2013 048 114
- US-A1- 2015 108 230

## Beschreibung

### Stand der Technik

Die Erfindung betrifft ein Heizungssystem nach dem Oberbegriff des Patentanspruchs 1 und ein Verfahren nach dem Oberbegriff des Patentanspruchs 7.

Es sind bereits Heizungssysteme bekannt, welche eine Wärmeerzeugereinheit, zumindest einen Heizkörper, zumindest ein Heizkörperventil, zumindest eine Vorlaufleitung, zumindest eine Rücklaufleitung und eine in der zumindest einen Vorlaufleitung angeordnete drehzahlgeregelte Umwälzpumpe umfassen.

Die US 2015/0108230 A1 offenbart ein Regelgerät eines Heiz-/Kühlsystems, das kontinuierlich die Heiz- bzw. Kühlanforderungen mehrerer Heiz- bzw. Kühlzonen überwacht und eine Leistung einer Heiz-/Kühlvorrichtung an einen Gesamtraum oder an eine erforderliche Energiezufuhr anpasst.

### Offenbarung der Erfindung

Die Erfindung geht aus von einem Heizungssystem mit zumindest einer Wärmeerzeugereinheit, mit zumindest einem Heizkörper, mit zumindest einem Heizkörperventil, mit zumindest einer Vorlaufleitung, mit zumindest einer Rücklaufleitung und mit zumindest einer in der zumindest einen Vorlaufleitung oder in der zumindest einen Rücklaufleitung angeordneten drehzahlgeregelten Umwälzpumpe.

Es wird vorgeschlagen, dass das Heizungssystem eine Steuer- und/oder Regeleinheit aufweist, welche dazu vorgesehen ist, eine Heizleistung der zumindest einen Wärmeerzeugereinheit in Abhängigkeit von zumindest einem Pumpenleistungskennwert der zumindest einen Umwälzpumpe zu regeln und/oder zu steuern und anhand des zumindest einen Pumpenleistungskennwerts auf eine Stellung des zumindest einen Heizkörperventils zu schließen.

Unter einem "Heizungssystem" soll insbesondere ein System verstanden werden, welches insbesondere zu einem Aufstellen innerhalb eines Gebäudes vorgesehen ist, und welches zu einer Erzeugung und/oder Speicherung und/oder Verteilung thermischer Energie vorzugsweise zur Beheizung von Räumlichkeiten vorgesehen ist. Insbesondere kann das Heizungssystem zur Erwärmung und/oder Speicherung und/oder Verteilung von Trink- und/oder Brauchwasser und/oder zur Versorgung zumindest eines Heizkreises vorgesehen sein. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Wärmeerzeugereinheit" soll in diesem Zusammenhang insbesondere eine Einheit verstanden werden, welche dazu vorgesehen ist, insbesondere unter Verwendung zumindest eines Energieträgers Energie zu erzeugen und/oder nutzbar zu machen. Insbesondere ist die Wärmeerzeugereinheit als ein Heizkessel, beispielsweise als ein Gasheizkessel und/oder ein Ölheizkessel und/oder ein Pelletheizkessel, ausgebildet. Unter einem "Heizkörper" soll in diesem Zusammenhang insbesondere eine Einheit und/oder ein Element verstanden werden, welche und/oder welches dazu vorgesehen ist, zumindest einen Teil einer von einem dem Heizkörper zugeführten Heizmedium transportierten thermischen Energie an die Umgebung abzugeben. Insbesondere kann der Heizkörper als ein Radiator, ein Konvektor und/oder als eine Heizleiste ausgebildet sein. Insbesondere kann das Heizungssystem eine Mehrzahl von Heizkörpern aufweisen. Unter einer "Vorlaufleitung" soll in diesem Zusammenhang insbesondere eine Fluidleitung verstanden werden, welche dazu vorgesehen ist, ein Heizmedium von der zumindest einen Wärmeerzeugereinheit zu dem zumindest einen Heizkörper hinzuleiten. Unter einer "Rücklaufleitung" soll in diesem Zusammenhang insbesondere eine Fluidleitung verstanden werden, welche dazu vorgesehen ist, ein Heizmedium von dem zumindest einen Heizkörper zu der zumindest einen Wärmeerzeugereinheit hinzuleiten. Unter einem "Heizkörperventil" soll in diesem Zusammenhang insbesondere ein Element zum Absperren, Drosseln und/oder Freigeben, Steuern und/oder Regeln eines Volumenstroms von Heizmedium verstanden werden, das beispielsweise zwischen einer Vorlaufleitung und einem Heizkörper angeordnet ist und eine zum Heizkörper zugeleitete Menge an Heizmedium in Abhängigkeit einer Stellung eines vom Ventil umfassten Verschlussteils verändern kann. Das Heizkörperventil kann als Thermostatventil ausgebildet sein. Unter einem "Thermostatventil" als besonderer Bauart eines Heizkörperventils soll in diesem Zusammenhang insbesondere ein insbesondere mechanischer Temperaturregler verstanden werden, welcher dazu vorgesehen ist, mittels eines Ventils in Abhängigkeit von einer Umgebungstemperatur einen Volumenstrom innerhalb einer Vorlaufleitung zu regeln und/oder zu steuern. Insbesondere ist das zumindest eine Thermostatventil dem zumindest einen Heizkörper innerhalb der Vorlaufleitung strömungstechnisch unmittelbar vorgeschaltet. Unter einer "Umwälzpumpe" soll in diesem Zusammenhang insbesondere eine Pumpe verstanden werden, welche dazu vorgesehen ist, ein erwärmtes Heizmedium von der zumindest einen Wärmeerzeugereinheit über die zumindest eine Vorlaufleitung zu dem zumindest einen Heizkörper zu fördern und/oder ein abgekühltes Heizmedium von dem zumindest einen Heizkörper über die zumindest eine Rücklaufleitung zu der zumindest einen Wärmeerzeugereinheit zu fördern. Insbesondere ist die zumindest eine Umwälzpumpe dazu vorgesehen, in Abhängigkeit von einer Ventilstellung des zumindest einen Heizkörperventils einen Volumenstrom innerhalb der zumindest einen Vorlaufleitung mittels zumindest einer Pumpenleistungsänderung zu variieren. Vorzugsweise ist die zumindest eine Umwälzpumpe als differenzdruckgeregelte Umwälzpumpe ausgebildet. Insbesondere ist die differenzdruckgeregelte Umwälzpumpe dazu vorgesehen, eine Pumpenleistung in Abhängigkeit von einem Druckunterschied zwischen in die Umwälzpumpe eintretendem und dem aus der Umwälzpumpe austretendem Heizmedium zu ändern.

Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Unter einem "Pumpenleistungskennwert" soll insbesondere ein Kennwert verstanden werden, welcher zumindest eine momentane Leistung der zumindest einen Umwälzpumpe enthält. Insbesondere umfasst das Heizungssystem zumindest einen Sensor, welcher dazu vorgesehen ist, den zumindest einen Pumpenleistungskennwert insbesondere kontinuierlich zu erfassen und insbesondere drahtlos und/oder drahtgebunden an die Steuer- und/oder Regeleinheit zu übertragen. Insbesondere kann der zumindest eine Sensor in die zumindest eine Umwälzpumpe integriert sein oder als separates Element außerhalb der zumindest einen Umwälzpumpe angeordnet sein. Die Steuer-und/oder Regeleinheit ist insbesondere dazu vorgesehen, anhand des zumindest einen Pumpenleistungskennwerts auf ein momentanes Umwälzvolumen eines Heizmediums innerhalb des Heizungssystems und/oder auf einen momentanen Wärmebedarf zu schließen. Darunter, dass die Steuer- und/oder Regeleinheit dazu vorgesehen ist, "eine Heizleistung der zumindest einen Wärmeerzeugereinheit in Abhängigkeit von dem zumindest einen Pumpenleistungskennwert der zumindest einen Umwälzpumpe zu regeln und/oder zu steuern" soll in diesem Zusammenhang insbesondere verstanden werden, dass die Steuer- und/oder Regeleinheit eine Heizleistung der zumindest einen Wärmeerzeugereinheit insbesondere kontinuierlich unmittelbar an den zumindest einen erfassten Pumpenleistungskennwert und/oder an ein anhand des zumindest einen Pumpenleistungskennwert ermitteltes momentanes Umwälzvolumen eines Heizmediums innerhalb des Heizungssystems und/oder an einen anhand des zumindest einen Pumpenleistungskennwerts ermittelten momentanen Wärmebedarf anpasst.

Die zumindest eine Steuer- und/oder Regeleinheit ist dazu vorgesehen, anhand des zumindest einem Pumpenleistungskennwerts auf eine Stellung des zumindest einen Heizkörperventils zu schließen. Darunter, dass die Steuer- und/oder Regeleinheit dazu vorgesehen ist, "anhand des zumindest einen Pumpenleistungskennwerts auf eine Stellung des zumindest einen Heizkörperventils zu schließen" soll insbesondere verstanden werden, dass die Steuer- und/oder Regeleinheit dazu vorgesehen ist, anhand einer Veränderung des zumindest einen Pumpenleistungskennwerts eine Veränderung einer Ventilstellung, insbesondere ein Öffnen und/oder ein Schließen, des zumindest einen Heizkörperventils zu erkennen. Hierdurch kann vorteilhaft einfach ein momentaner Wärmebedarf und/oder eine Änderung eines Wärmebedarfs ermittelt werden.

Durch eine derartige Ausgestaltung kann ein gattungsgemäßes Heizungssystem mit verbesserten Betriebseigenschaften bereitgestellt werden. Insbesondere kann eine vorteilhaft schnelle und/oder zuverlässige und/oder bedarfsgerechte Anpassung einer Heizleistung der Wärmeerzeugereinheit an einen sich ändernden Wärmebedarf erreicht werden. Ferner kann/können eine aufwändige und/oder störanfällige Einzelraumtemperaturmessung und/oder eine direkte Volumenstrommessung entfallen, wodurch Installations- und/oder Wartungskosten vorteilhaft reduziert werden können.

Ferner wird vorgeschlagen, dass der zumindest eine Pumpenleistungskennwert zumindest teilweise von einer Stromaufnahme der zumindest einen Umwälzpumpe gebildet ist. Insbesondere weist das Heizungssystem zumindest einen Stromsensor auf, welcher dazu vorgesehen ist, insbesondere kontinuierlich eine Stromaufnahme der zumindest einen Umwälzpumpe zu erfassen. Hierdurch kann auf einfache und/oder zuverlässige Weise ein Pumpenleistungskennwert erfasst werden. Ferner kann durch eine Verwendung eines Stromsensors eine vorteilhaft einfache und/oder preiswerte Nachrüstung eines bestehenden Heizungssystems erfolgen.

Des Weiteren wird vorgeschlagen, dass der zumindest eine Pumpenleistungskennwert zumindest teilweise von einer Drehzahl der zumindest einen Umwälzpumpe gebildet ist. Insbesondere weist das Heizungssystem zumindest einen Drehzahlsensor auf, welcher dazu vorgesehen ist, insbesondere kontinuierlich eine Drehzahl der zumindest einen Umwälzpumpe zu erfassen. Hierdurch kann auf einfache und/oder zuverlässige Weise ein Pumpenleistungskennwert erfasst werden. Ferner kann vorteilhaft eine Verwendung von Umwälzpumpen mit integrierten Drehzahlsensoren erfolgen.

Ferner wird vorgeschlagen, dass die Steuer- und/oder Regeleinheit dazu vorgesehen ist, die Heizleistung der zumindest einen Wärmeerzeugereinheit bei einem insbesondere durch ein Schließen des zumindest einen Heizkörperventils hervorgerufenes Absinken des zumindest einen Pumpenleistungskennwerts zu reduzieren. Insbesondere ist die Steuer- und/oder Regeleinheit dazu vorgesehen, eine Heizleistung der zumindest einen Wärmeerzeugereinheit unmittelbar bei einer Detektion eines Absinkens des zumindest einen Pumpenleistungskennwerts die Heizleistung der zumindest einen Wärmeerzeugereinheit zu reduzieren. Hierdurch kann vorteilhaft schnell und/oder bedarfsgerecht auf ein Schließen des zumindest einen Heizkörperventils und somit auf einen reduzierten Wärmebedarf reagiert werden.

Des Weiteren wird vorgeschlagen, dass die Steuer- und/oder Regeleinheit dazu vorgesehen ist, die Heizleistung der zumindest einen Wärmeerzeugereinheit bei einem insbesondere durch ein Öffnen des zumindest einen Heizkörperventils hervorgerufenes Ansteigen des zumindest einen Pumpenleistungskennwerts zu steigern. Insbesondere ist die Steuer- und/oder Regeleinheit dazu vorgesehen, eine Heizleistung der zumindest einen Wärmeerzeugereinheit unmittelbar bei einer Detektion eines Ansteigens des zumindest einen Pumpenleistungskennwerts die Heizleistung der zumindest einen Wärmeerzeugereinheit zu steigern. Hierdurch kann vorteilhaft schnell und/oder bedarfsgerecht auf ein Öffnen des zumindest einen Heizkörperventils und somit auf einen gesteigerten Wärmebedarf reagiert werden.

Zudem wird ein Verfahren zum Betrieb eines Heizungssystems mit zumindest einer Wärmeerzeugereinheit, mit zumindest einem Heizkörper, mit zumindest einem Heizkörperventil, mit zumindest einer Vorlaufleitung, mit zumindest einer Rücklaufleitung und mit zumindest einer in der zumindest einen Vorlaufleitung angeordneten drehzahlgeregelten Umwälzpumpe vorgeschlagen, wobei eine Heizleistung der zumindest einen Wärmeerzeugereinheit in Abhängigkeit von zumindest einem Pumpenleistungskennwert der zumindest einen Umwälzpumpe geregelt und/oder gesteuert und anhand des zumindest einen Pumpenleistungskennwerts auf eine Stellung des zumindest einen Heizkörperventils (16) geschlossen wird. Hierdurch kann eine vorteilhaft schnelle und/oder zuverlässige und/oder bedarfsgerechte Anpassung einer Heizleistung der Wärmeerzeugereinheit an einen sich ändernden Wärmebedarf erreicht werden.

Ferner wird vorgeschlagen, dass die Heizleistung der zumindest einen Wärmeerzeugereinheit bei einem Absinken des zumindest einen Pumpenleistungskennwerts reduziert wird. Insbesondere wird eine Heizleistung der zumindest einen Wärmeerzeugereinheit unmittelbar bei einer Detektion eines Absinkens des zumindest einen Pumpenleistungskennwerts reduziert. Hierdurch kann vorteilhaft schnell und/oder bedarfsgerecht auf ein Schließen des zumindest einen Heizkörperventils und somit auf einen reduzierten Wärmebedarf reagiert werden.

Des Weiteren wird vorgeschlagen, dass die Heizleistung der zumindest einen Wärmeerzeugereinheit bei einem Ansteigen des zumindest einen Pumpenleistungskennwerts gesteigert wird. Insbesondere wird eine Heizleistung der zumindest einen Wärmeerzeugereinheit unmittelbar bei einer Detektion eines Ansteigens des zumindest einen Pumpenleistungskennwerts gesteigert. Hierdurch kann vorteilhaft schnell und/oder bedarfsgerecht auf ein Öffnen des zumindest einen Heizkörperventils und somit auf einen gesteigerten Wärmebedarf reagiert werden.

Das erfindungsgemäße Heizungssystem und/oder das erfindungsgemäße Verfahren soll/sollen hierbei nicht auf die oben beschriebene Anwendung und Ausführungsform beschränkt sein. Insbesondere kann das erfindungsgemäße Heizungssystem und/oder das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

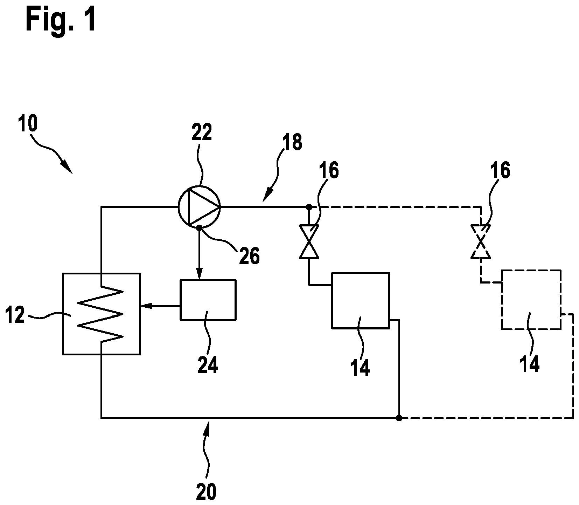

- Fig. 1: eine schematische Darstellung eines Heizungssystems mit einer Wärmeerzeugereinheit, mit einer in einer Vorlaufleitung angeordneten drehzahlgeregelten Umwälzpumpe und mit einer Steuer- und/oder Regeleinheit, welche dazu vorgesehen ist, eine Heizleistung der Wärmeerzeugereinheit in Abhängigkeit von einem Pumpenleistungskennwert der Umwälzpumpe zu regeln und/oder zu steuern.

### Beschreibung des Ausführungsbeispiels

Figur 1 zeigt eine schematische Darstellung eines Heizungssystems 10. Das Heizungssystem 10 weist eine Wärmeerzeugereinheit 12 auf. Die Wärmeerzeugereinheit 12 ist insbesondere als ein Heizkessel, beispielsweise als ein Gasheizkessel und/oder ein Ölheizkessel und/oder ein Pelletheizkessel, ausgebildet. Ferner weist das Heizungssystem 10 einen Heizkörper 14 auf. Der Heizkörper 14 ist insbesondere dazu vorgesehen eine von einem Heizmedium transportierte thermische Energie an eine Umgebung abzugeben. Wie in Figur 1 angedeutet kann das Heizungssystem 10 eine Mehrzahl von Heizkörpern 14 aufweisen, welche insbesondere parallel zueinander verschaltet sind. Des Weiteren weist das Heizungssystem 10 eine Vorlaufleitung 18 und eine Rücklaufleitung 20 auf. Die Vorlaufleitung 18 ist dazu vorgesehen, dem Heizkörper 14 ein durch die Wärmeerzeugereinheit 12 erwärmtes Heizmedium zuzuführen. Die Rücklaufleitung 20 ist dazu vorgesehen, ein abgekühltes Heizkörper 14 zurück zu der Wärmeerzeugereinheit 12 zu leiten. Ferner weist das Heizungssystem 10 ein Heizkörperventil 16 auf, das Heizkörperventil 16 ist beispielsweise als Thermostatventil 16 ausgebildet. Das Thermostatventil 16 ist innerhalb der Vorlaufleitung 18 strömungstechnisch unmittelbar vor dem Heizkörper 14 angeordnet. Zudem weist das Heizungssystem 10 eine in der Vorlaufleitung 18 angeordneten drehzahlgeregelten Umwälzpumpe 22 auf. Die Umwälzpumpe 22 ist als eine differenzdruckgeregelte Umwälzpumpe 22, vorzugsweise als eine Hocheffizienzpumpe, ausgebildet. Des Weiteren umfasst das Heizungssystem 10 eine Steuer- und/oder Regeleinheit 24. Die Steuer- und/oder Regeleinheit 24 ist dazu vorgesehen, eine Heizleistung der zumindest einen Wärmeerzeugereinheit 12 in Abhängigkeit von einem Pumpenleistungskennwert der Umwälzpumpe 22 zu regeln und/oder zu steuern.

Das Heizungssystem 10 weist zumindest einen Sensor 26 auf, welcher dazu vorgesehen ist, den Pumpenleistungskennwert der Umwälzpumpe 22 zu erfassen und an die Steuer- und/oder Regeleinheit 24 zu übertragen. Der Pumpenleistungskennwert ist von einer Stromaufnahme und/oder von einer Drehzahl der zumindest einen Umwälzpumpe 22 gebildet. Der Sensor 26 ist insbesondere als ein Stromsensor ausgebildet, welcher dazu vorgesehen ist, insbesondere kontinuierlich eine Stromaufnahme der Umwälzpumpe 22 zu erfassen. Alternativ oder zusätzlich kann der Sensor 26 als ein Drehzahlsensor ausgebildet sein, welcher dazu vorgesehen ist, insbesondere kontinuierlich eine Drehzahl der Umwälzpumpe 22 zu erfassen.

Die Steuer- und/oder Regeleinheit 24 ist dazu vorgesehen, anhand des Pumpenleistungskennwerts auf eine Stellung des zumindest einen Thermostatventils 16 zu schließen. In Abhängigkeit von einer Stellung des Thermostatventils 16 stellt sich aufgrund der Differenzdruckregelung der Umwälzpumpe 22 ein variabler Volumenstrom in der Vorlaufleitung 18 ein. Ein Öffnen des Thermostatventils 16 führt zu einem Anstieg der Pumpenleistung und somit des Pumpenleistungskennwerts der Umwälzpumpe 22, welcher von der Steuer- und/oder Regeleinheit 24 erkannt wird. Die Steuer-und/oder Regeleinheit 24 ist dazu vorgesehen, die Heizleistung der Wärmeerzeugereinheit 12 bei einem Ansteigen des Pumpenleistungskennwerts zu steigern und/oder die Wärmeerzeugereinheit 12 in einen Heizbetrieb zu versetzen. Ein Schließen des Thermostatventils 16 führt zu einem Absinken der Pumpenleistung und somit des Pumpenleistungskennwerts der Umwälzpumpe 22, welches von der Steuer-und/oder Regeleinheit 24 erkannt wird. Die Steuer- und/oder Regeleinheit 24 ist dazu vorgesehen, die Heizleistung der zumindest einen Wärmeerzeugereinheit 12 bei einem Absinken des zumindest einen Pumpenleistungskennwerts zu reduzieren und/oder insbesondere bei einem Unterschreiten eines Minimalwerts, welcher insbesondere ein Fehlen eines nennenswerten Volumenstroms und damit ein Fehlen einer Wärmeabnahme anzeigt, einen Heizbetrieb der Wärmeerzeugereinheit 12 zu beenden. Alternativ oder zusätzlich kann bei einer modulierenden Wärmeerzeugereinheit 12 in einem Zwischenbereich zwischen einem vollständigen Öffnen und einem vollständigen Schließen des Thermostatventils 16 ein entsprechender Soll-Volumenstrom eingeregelt werden.

## Patentansprüche

1. Heizungssystem mit zumindest einer Wärmeerzeugereinheit (12), mit zumindest einem Heizkörper (14), mit zumindest einem Heizkörperventil (16), mit zumindest einer Vorlaufleitung (18), mit zumindest einer Rücklaufleitung (20), mit zumindest einer in der zumindest einen Vorlaufleitung (18) oder in der zumindest einen Rücklaufleitung (20) angeordneten drehzahlgeregelten Umwälzpumpe (22) und eine Steuer- und/oder Regeleinheit (24), welche dazu vorgesehen ist, eine Heizleistung der zumindest einen Wärmeerzeugereinheit (12) in Abhängigkeit von zumindest einem Pumpenleistungskennwert der zumindest einen Umwälzpumpe (22) zu regeln und/oder zu steuern, wobei die Steuer- und/oder Regeleinheit (24) dazu vorgesehen ist, anhand des zumindest einen Pumpenleistungskennwerts auf eine Stellung des zumindest einen Heizkörperventils (16) zu schließen.

2. Heizungssystem nach Anspruch 1, **dadurch gekennzeichnet, dass** die zumindest eine Umwälzpumpe (22) als differenzdruckgeregelte Umwälzpumpe ausgebildet ist.

3. Heizungssystem nach Anspruch 1 oder 2, **dadurch gekennzeichnet, dass** der zumindest eine Pumpenleistungskennwert zumindest teilweise von einer Stromaufnahme der zumindest einen Umwälzpumpe (22) gebildet ist.

4. Heizungssystem nach einem der vorhergehenden Ansprüche, **dadurch gekennzeichnet, dass** der zumindest eine Pumpenleistungskennwert zumindest teilweise von einer Drehzahl der zumindest einen Umwälzpumpe (22) gebildet ist.

5. Heizungssystem nach einem der vorhergehenden Ansprüche, **dadurch gekennzeichnet, dass** die Steuer- und/oder Regeleinheit (24) dazu vorgesehen ist, die Heizleistung der zumindest einen Wärmeerzeugereinheit (12) bei einem Absinken des zumindest einen Pumpenleistungskennwerts zu reduzieren.

6. Heizungssystem nach einem der vorhergehenden Ansprüche, **dadurch gekennzeichnet, dass** die Steuer- und/oder Regeleinheit (24) dazu vorgesehen ist, die Heizleistung der zumindest einen Wärmeerzeugereinheit (12) bei einem Ansteigen des zumindest einen Pumpenleistungskennwerts zu steigern.

7. Verfahren zum Betrieb eines Heizungssystems (10) mit zumindest einer Wärmeerzeugereinheit (12), mit zumindest einem Heizkörper (14), mit zumindest einem Heizkörperventil (16), mit zumindest einer Vorlaufleitung (18), mit zumindest einer Rücklaufleitung (20), mit zumindest einer in der zumindest einen Vorlaufleitung (18) oder in der zumindest einen Rücklaufleitung (20) angeordneten drehzahlgeregelten Umwälzpumpe (22), wobei eine Heizleistung der zumindest einen Wärmeerzeugereinheit (12) in Abhängigkeit von zumindest einem Pumpenleistungskennwert der zumindest einen Umwälzpumpe (22) geregelt und/oder gesteuert wird, **dadurch gekennzeichnet, dass** die zumindest eine Steuer-und Regeleinheit (24) anhand des zumindest einen Pumpenleistungskennwerts auf eine Stellung des zumindest einen Heizkörperventils (16) schließ.

8. Verfahren nach Anspruch 8, **dadurch gekennzeichnet, dass** die Heizleistung der zumindest einen Wärmeerzeugereinheit (12) bei einem Absinken des zumindest einen Pumpenleistungskennwerts reduziert wird.

9. Verfahren nach Anspruch 8 oder 9, **dadurch gekennzeichnet, dass,** die Heizleistung der zumindest einen Wärmeerzeugereinheit (12) bei einem Ansteigen des zumindest einen Pumpenleistungskennwerts gesteigert wird.

## Claims

1. Heating system having at least one heat generator unit (12), having at least one heating body (14), having at least one heating-body valve (16), having at least one feed line (18), having at least one return line (20), having at least one rotational speed-regulated circulating pump (22) which is arranged in the at least one feed line (18) or in the at least one return line (20), and having a control and/or regulating unit (24) which is provided for regulating and/or controlling a heating power of the at least one heat generator unit (12) in a manner dependent on at least one pump power characteristic value of the at least one circulating pump (22), wherein the control and/or regulating unit (24) is provided for inferring a position of the at least one heating-body valve (16) on the basis of the at least one pump power characteristic value.

2. Heating system according to Claim 1, **characterized in that** the at least one circulating pump (22) is designed in the form of a differential pressure-regulated circulating pump.

3. Heating system according to Claim 1 or 2, **characterized in that** the at least one pump power characteristic value is formed at least partially from a current consumption of the at least one circulating pump (22).

4. Heating system according to one of the preceding claims, **characterized in that** the at least one pump power characteristic value is formed at least partially from a rotational speed of the at least one circulating pump (22).

5. Heating system according to one of the preceding claims, **characterized in that** the control and/or regulating unit (24) is provided for reducing the heating power of the at least one heat generator unit (12) if there is a drop in the at least one pump power characteristic value.

6. Heating system according to one of the preceding claims, **characterized in that** the control and/or regulating unit (24) is provided for increasing the heating power of the at least one heat generator unit (12) if there is an increase in the at least one pump power characteristic value.

7. Method for operating a heating system (10) having at least one heat generator unit (12), having at least one heating body (14), having at least one heating-body valve (16), having at least one feed line (18), having at least one return line (20), and having at least one rotational speed-regulated circulating pump (22) which is arranged in the at least one feed line (18) or in the at least one return line (20), wherein a heating power of the at least one heat generator unit (12) is regulated and/or controlled in a manner dependent on at least one pump power characteristic value of the at least one circulating pump (22), **characterized in that** the at least one control and regulating unit (24) infers a position of the at least one heating-body valve (16) on the basis of the at least one pump power characteristic value.

8. Method according to Claim 7, **characterized in that** the heating power of the at least one heat generator unit (12) is reduced if there is a drop in the at least one pump power characteristic value.

9. Method according to Claim 7 or 8, **characterized in that** the heating power of the at least one heat generator unit (12) is increased if there is an increase in the at least one pump power characteristic value.

## Revendications

1. Système de chauffage avec au moins une unité de production de chaleur (12), avec au moins un corps de chauffage (14), avec au moins une soupape de corps de chauffage (16), avec au moins une conduite d'arrivée (18), avec au moins une conduite de retour (20), avec au moins une pompe de circulation (22) à régulation par le nombre de tours disposée dans ladite au moins une conduite d'arrivée (18) ou dans ladite au moins une conduite de retour (20), et une unité de commande et/ou de régulation (24), qui est prévue pour réguler et/ou commander une puissance de chauffage de ladite au moins une unité de production de chaleur (12) en fonction d'au moins un paramètre de puissance de pompage de ladite au moins une pompe de circulation (22), dans lequel l'unité de commande et/ou de régulation (24) est prévue pour conclure à une position de ladite au moins une soupape de corps de chauffage (16) à l'aide dudit au moins un paramètre de puissance de pompage.

2. Système de chauffage selon la revendication 1, **caractérisé en ce que** ladite au moins une pompe de circulation (22) est constituée par une pompe de circulation à régulation par différence de pression.

3. Système de chauffage selon une revendication 1 ou 2, **caractérisé en ce que** ledit au moins un paramètre de puissance de pompage est formé au moins en partie par une consommation de courant de ladite au moins une pompe de circulation (22).

4. Système de chauffage selon l'une quelconque des revendications précédentes, **caractérisé en ce que** ledit au moins un paramètre de puissance de pompage est formé au moins en partie par un nombre de tours de ladite au moins une pompe de circulation (22).

5. Système de chauffage selon l'une quelconque des revendications précédentes, **caractérisé en ce que** l'unité de commande et/ou de régulation (24) est prévue pour réduire la puissance de chauffage de ladite au moins une unité de production de chaleur (12) lors d'une baisse dudit au moins un paramètre de puissance de pompage.

6. Système de chauffage selon l'une quelconque des revendications précédentes, **caractérisé en ce que** l'unité de commande et/ou de régulation (24) est prévue pour augmenter la puissance de chauffage de ladite au moins une unité de production de chaleur (12) lors d'une hausse dudit au moins un paramètre de puissance de pompage.

7. Procédé de fonctionnement d'un système de chauffage (10) avec au moins une unité de production de chaleur (12), avec au moins un corps de chauffage (14), avec au moins une soupape de corps de chauffage (16), avec au moins une conduite d'arrivée (18), avec au moins une conduite de retour (20), avec au moins une pompe de circulation (22) à régulation par le nombre de tours disposée dans ladite au moins une conduite d'arrivée (18) ou dans ladite au moins une conduite de retour (20), dans lequel on régule et/ou on commande une puissance de chauffage de ladite au moins une unité de production de chaleur (12) en fonction d'au moins un paramètre de puissance de pompage de ladite au moins une pompe de circulation (22), **caractérisé en ce que** ladite au moins une unité de commande et de régulation (24) conclut à une position de ladite au moins une soupape de corps de chauffage (16) à l'aide dudit au moins un paramètre de puissance de pompage.

8. Procédé selon la revendication 7, **caractérisé en ce que** l'on réduit la puissance de chauffage de ladite au moins une unité de production de chaleur (12) lors d'une baisse dudit au moins un paramètre de puissance de pompage.

9. Procédé selon une revendication 7 ou 8, **caractérisé en ce que** l'on augmente la puissance de chauffage de ladite au moins une unité de production de chaleur (12) lors d'une hausse dudit au moins un paramètre de puissance de pompage.
